# EUROPÄISCHE PATENTSCHRIFT

(11) **EP 0 909 602 B1**
(45) Veröffentlichungstag und Bekanntmachung des Hinweises auf die Patenterteilung: **06.02.2002**
(21) Anmeldenummer: 98110712.1
(22) Anmeldetag: 10.06.1998
(51) Int. Cl.: B23C 3/00, B23C 3/12

(54) **Verputzvorrichtung für Fenster- oder Türrahmen**
Cleaning device for window or door frames
Dispositif à ébarber pour châssis de fenêtres ou portes

(30) Priorität: 12.06.1997 DE 19724699
(43) Veröffentlichungstag der Anmeldung: 21.04.1999
(73) Patentinhaber: Eisenbach, Bernhard, D-65611 Brechen (DE)
(72) Erfinder: Eisenbach, Bernhard, D-65611 Brechen (DE)
(74) Vertreter: Katscher, Helmut, Dipl.-Ing.

(56) Entgegenhaltungen:
- EP-A- 0 618 032
- DE-A- 4 018 145

## Beschreibung

Die Erfindung betrifft eine Verputzvorrichtung für die Ecken von aus stumpfgeschweißten Kunststoffprofilstücken bestehenden Fenster- oder Türrahmen, mit einem Werkzeugträger, der einen Scheibenfräser für das Rahmenaußeneck trägt und an einem Maschinengestell mittels einer zweiachsigen Bahnsteuerung in einer Horizontalachse und einer Vertikalachse entlang der Kontur des Rahmenecks steuerbar ist, wobei an einem oberen und einem unteren Trägerarm des Werkzeugträgers Abstechwerkzeuge für die obere und die untere Rahmensichtfläche angebracht sind, mit Fräsern zur Bearbeitung des Rahmenecks.

Beim thermoplastischen Stumpfschweißen von Kunststoffprofilstücken, insbesondere bei der Herstellung von Fenster- oder Türrahmen, entstehen am gesamten Umfang der zusammengeschweißten Ecken Schweißraupen, die verputzt und bündig bearbeitet werden müssen. Bei herkömmlichen Maschinen hierfür wird das Außenecke durch Satzwerkzeuge (Fräser) bearbeitet, wobei für jedes Profil ein besonderes Satzwerkzeug vorhanden sein muß. Bei anderen bekannten Maschinen wird das Außeneck mit einem Scheibenfräser ähnlich einer Kreissäge bearbeitet. Dieser schmale Scheibenfräser wird über zwei Achsen der Steuerung an der gesamten Außenkontur des Rahmenecks entlanggeführt. Eine solche Maschine der eingangs genannten Gattung ist beispielsweise aus EP 0 443 398 B1 bekannt.

Die Schweißraupen an der oberen und unteren Sichtfläche werden durch Abstechwerkzeuge abgestochen, die an einem oberen und unteren Trägerarm des Werkzeugträgers angebracht sind. Diese Abstechwerkzeuge können unmittelbar am Trägerarm des Werkzeugträgers oder an einem gesonderten Aggregat ausfahrbar angebracht sein. Für das Bearbeiten der Innenecke werden Bohr- und Abstechwerkzeuge oberhalb und unterhalb des zu bearbeitenden Profils eingesetzt, die einzeln durch Luftzylinder oder durch gesonderte steuerbare Achsen verfahrbar sind. Für das Wegfräsen der Schweißraupen an den Dichtstreifennuten des Rahmenecks, den zurückliegenden Stellen am Außeneck und verschiedenen Stufen am Inneneck werden gesonderte Fräsaggregate eingesetzt, die ausfahrbar am Werkzeugträger gelagert sind und durch Luftzylinder oder gesteuerte Achsen verfahrbar sind.

Dieser Maschinenaufbau bedingt, daß die bekannten Maschinen verhältnismäßig groß und sperrig sind und deshalb nur schwierig in Fertigungsstraßen eingesetzt werden können.

Aufgabe der Erfindung ist es daher, eine Verputzvorrichtung der eingangs genannten Gattung so auszubilden, daß sie mit kleinen Abmessungen gebaut werden kann und deshalb in Fertigungsstraßen leicht eingesetzt werden kann.

Diese Aufgabe wird erfindungsgemäß dadurch gelöst, daß der Werkzeugträger einen dritten, mittleren Trägerarm aufweist, an dem die Fräser gelagert sind. Vorzugsweise weist ein am mittleren Trägerarm angeordneter Fräskopf ein Sägeblatt auf, das gleichachsig mit einem oberen Fingerfräser und einem unteren Fingerfräser verbunden ist.

Mit den am mittleren Trägerarm gelagerten Fräsern, die als Sägeblatt und Fingerfräser ausgeführt sein können, werden alle Fräsvorgänge beim Verputzen des Rahmenecks allein durch Verfahren des Werkzeugträgers in zwei Achsen ausgeführt. Für die verbleibenden Abstechvorgänge genügen die fest an dem oberen und unteren Trägerarm angebrachten Abstechwerkzeuge. Die Notwendigkeit gesondert ausfahrbarer Fräs- oder Abstechwerkzeuge entfällt.

Dadurch wird ein einfacher und platzsparender Maschinenaufbau erreicht. Wegen der erzielbaren, sehr kleinen Abmessungen kann die Verputzvorrichtung in jeder Fertigungsstraße eingesetzt werden.

Da die Größe der Maschine weitgehend vom Sägeblattdurchmesser abhängig ist, ist man bestrebt, diesen so gering wie möglich zu halten. Gemäß einer bevorzugten Ausführungsform der Erfindung ist deshalb vorgesehen, daß der Fräskopf zwischen seinen beiden Lagern bis auf die Welle ausgespart ist. Damit wird erreicht, daß mit einem verhältnismäßig kleinen Sägeblatt dennoch ein Profil mit tiefen Nuten und Falzen bearbeitet werden kann. Um schmale Schlitze bearbeiten zu können, muß die Sägeblattdicke entsprechend gering sein. Auch dies läßt sich nur durch einen möglichst kleinen Sägeblattdurchmesser erreichen.

Weitere vorteilhafte Ausgestaltungen des Erfindungsgedankens sind Gegenstand weiterer Unteransprüche.

Zur Erläuterung der Erfindung wird nachfolgend ein Ausführungsbeispiel beschrieben, das in der Zeichnung dargestellt ist. Es zeigt:
Fig. 1 eine Seitenansicht einer Verputzvorrichtung mit einer zu bearbeitenden Fensterecke im Schnitt,

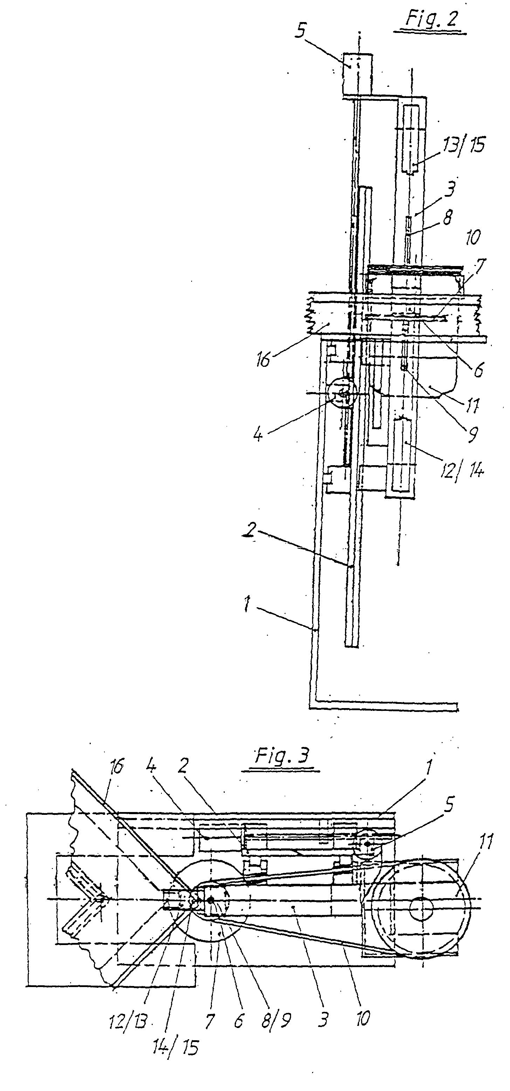

Fig. 2 eine Vorderansicht der Verputzvorrichtung nach Fig. 1,
Fig. 3 eine Draufsicht auf die Verputzvorrichtung nach den Fig. 1 und 2,
Fig. 4 einen Teilschnitt durch den Fräskopf und das Fenstereck,
Fig. 5 einen Teilschnitt durch einen demgegenüber abgewandelten Fräskopf und das Fenstereck,
Fig. 6 einen Teilschnitt durch das Fenstereck bei der Bearbeitung am Außen- und Inneneck,
Fig. 7 die Bearbeitung der Schweißnaht im Bereich der Dichtungsnut,
Fig. 8 die Bearbeitung der Dichtungsnut im Bereich der Außenecke,
Fig. 9 und 10 das Abstechen der Schweißraupe an der Innenecke am Überschlag bzw. am Falz,
Fig. 11 das Abstechen der Sichtflächenschweißraupe an der Unterseite des Rahmenecks und
Fig. 12 - 14 eine abgewandelte Ausführungsform.

An einem Maschinengestell, das als Maschinenplatte 1 ausgeführt sein kann, sind Führungen 35 montiert, die einen Kreuzschlitten 2 waagrecht führen. Am Kreuzschlitten 2 sind Führungen montiert, die einen Werkzeugträger 3 senkrecht führen. Die waagrechte und senkrechte Bewegung wird durch Stellmotore 4 und 5 über Gewindespindeln vorgenommen. Der Werkzeugträger 3 weist einen oberen Trägerarm 3a, einen unteren Trägerarm 3b und einen mittleren Trägerarm 3c auf.

Am mittleren Trägerarm 3c des Werkzeugträgers 3 ist ein Fräskopf 6 mit einem als Sägeblatt 7 ausgeführten Scheibenfräser und mit gleichachsig hierzu nach oben bzw. unten ragenden Fingerfräsern 8 und 9 angeordnet. Der Fräskopf 6 wird über einen Riementrieb 10 durch einen Motor 11 angetrieben.

Am oberen Trägerarm 3a und am unteren Trägerarm 3b des Werkzeugträgers 3 sind jeweils ein Abstechwerkzeug 12 und 13 für die Sichtflächenbearbeitung sowie jeweils ein Abstechwerkzeug 14 und 15 für die Inneneckbearbeitung im Falz und am Überschlag angebracht.

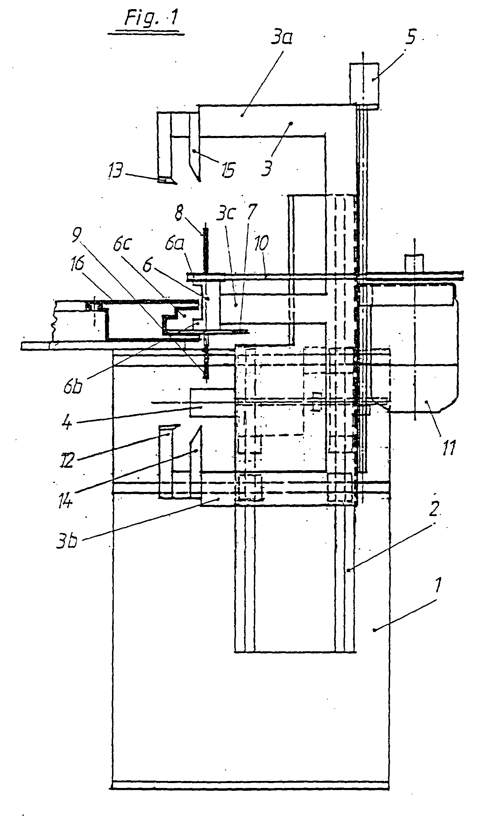

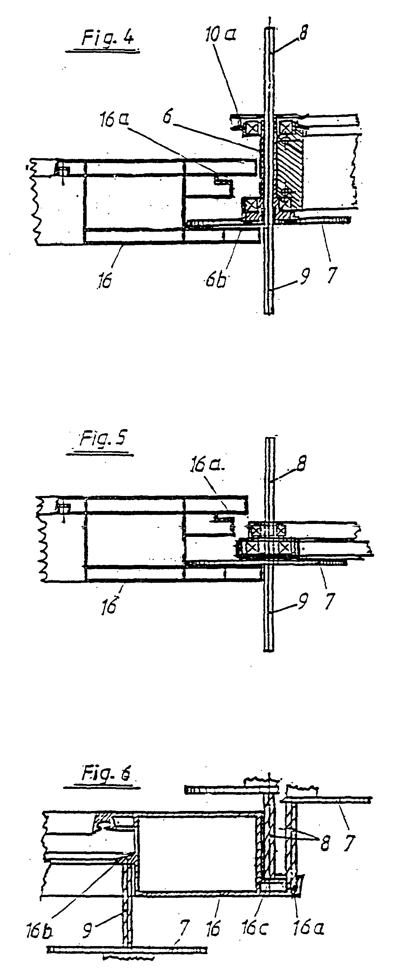

Das Sägeblatt 7 ist im Durchmesser klein und in seiner Stärke dünn gehalten, um Platz zu sparen und auch schmale Nuten 16a fräsen zu können. Deshalb ist der Fräskopf 6 zwischen seinen beispielsweise mit Kugellagern ausgerüsteten Lagern 6a und 6b bis auf die Welle ausgespart. Die Aussparung 6c ist in den Fig. 1 und 4 zu erkennen.

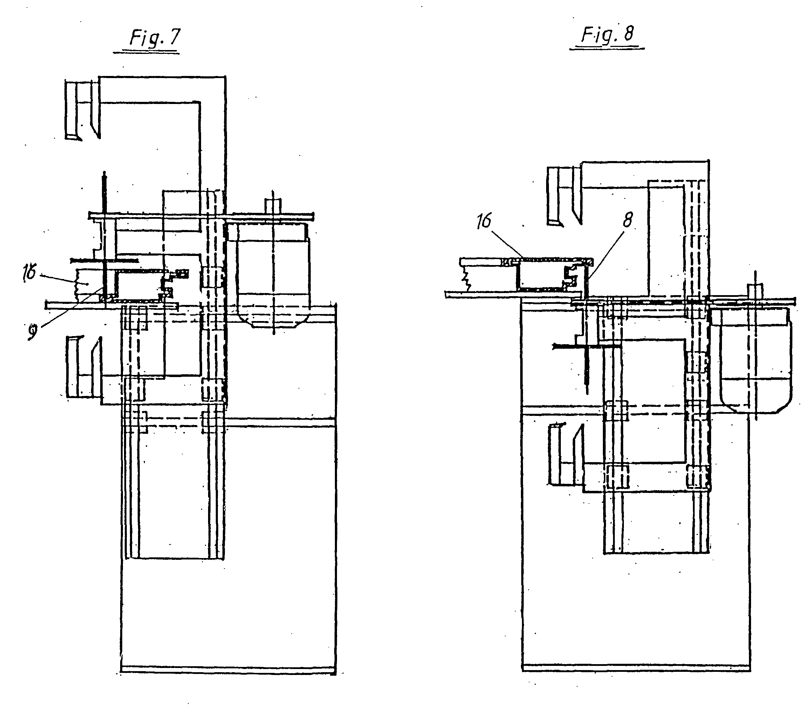

Wie in Fig. 4 gezeigt, ist das obere Lager 6a innerhalb der Antriebsriemenscheibe 10a angeordnet, damit der Fräskopf 6 niedrig bleibt. Beim Antrieb mit einem Flachriemen kann auch ein niedriger Fräskopf verwendet werden, wenn das Lager innerhalb der Flachriemenscheibe angeordnet ist (Fig. 5).

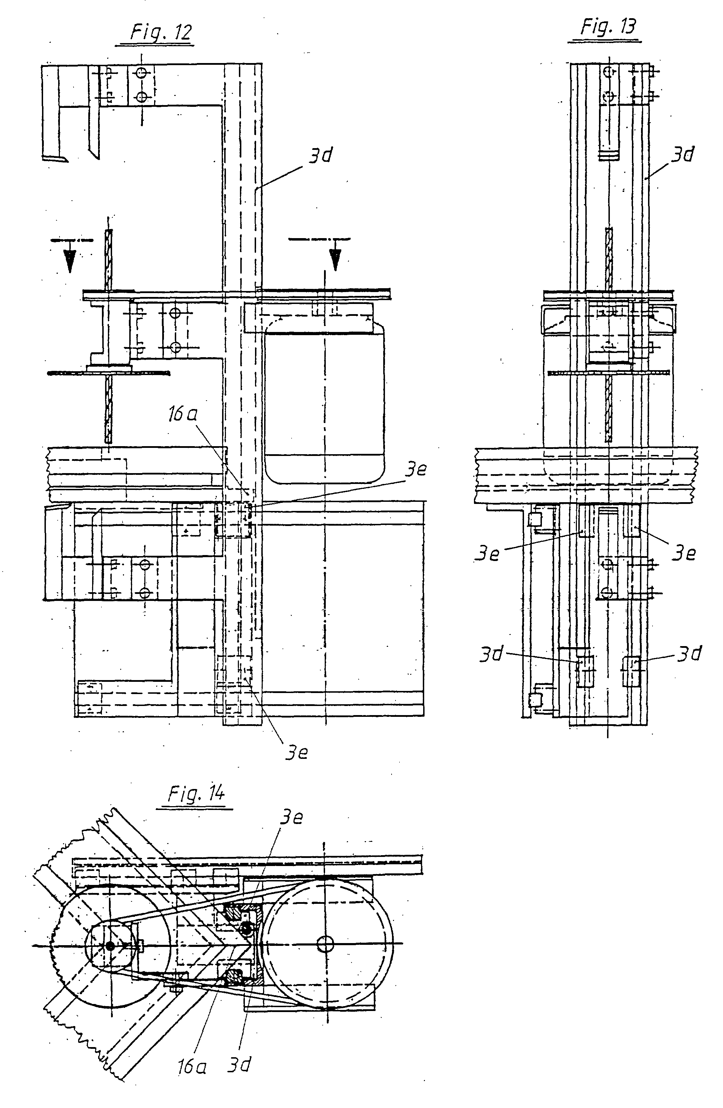

Weil die Verfahrwege der Schlitten so kurz wie möglich und die Führungen so nahe wie möglich an der Bearbeitungsstelle sein sollen, kann der senkrechte Träger 3d des Schlittens 3 U-förmig ausgebildet und die Führungslager 3e an der Innenseite der U-Schenkel montiert sein (Fig. 12-14), damit die Fenster-Außenecke 16a in der vordersten Stellung des Schlittens in den U-förmigen Träger 3d hineinragen kann, wie in Fig. 14 gezeigt ist.

Das Festspannen des Fensterecks erfolgt wie üblich mit Luftzylindern 31. Bevor jedoch festgespannt werden kann, muß das Fenstereck 16 eingezogen werden, bis es fest an Anschlagbacken anliegt.

Die Arbeitsweise ist wie folgt:

Das Fenstereck wird in die Maschine eingeschoben und durch Einzugsbacken fest an die Anschlagbacken eingezogen. Dann spannen Luftzylinder das Profil fest.

Mit dem Sägeblatt 7 wird die Kontur der Außenecke 16 abgefahren und so die Schweißnaht entfernt. Die Stellmotore 4 und 5 sind entsprechend programmiert.

Nach dem Abfräsen der Außeneck-Schweißraupe fräst der Fingerfräser 9 die Innenecke des Profils 16 im Falz (Fig. 7). Zugleich kann die daneben liegende Fläche abgefräst werden. Danach fräst der Fräser 8 die Außenecke und ggf. die daneben liegende Fläche.

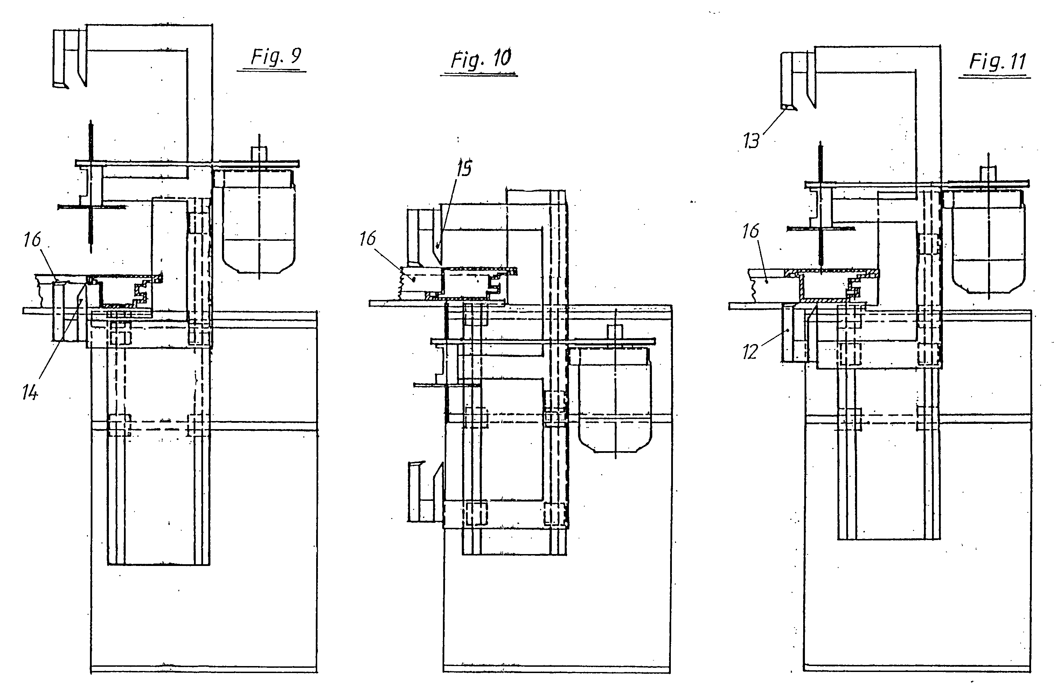

Anschließend sticht das für die Bearbeitung des Innenecks vorgesehene Abstechmesser oder Abstechwerkzeug 14 bzw. 15 die Innenecke am Überschlag ab (Fig. 9).

Danach sticht das zur Bearbeitung des Innenecks vorgesehene Abstechwerkzeug oder Abstechmesser 14 oder 15 die Innenecke am Falz ab. Danach werden die Sichtflächen durch die Abstechwerkzeuge 12 und 13 nacheinander bearbeitet.

## Patentansprüche

1. Verputzvorrichtung für die Ecken von aus stumpfgeschweißten Kunststoffprofilstücken bestehenden Fenster- oder Türrahmen, mit einem Werkzeugträger (3), der einen Scheibenfräser (7) für das Rahmenaußeneck trägt und an einem Maschinengestell (1) mittels einer zweiachsigen Bahnsteuerung in einer Horizontalachse und einer Vertikalachse entlang der Kontur des Rahmenecks steuerbar ist, wobei an einem oberen und einem unteren Trägerarm (3a bzw. 3b) des Werkzeugträgers (3) Abstechwerkzeuge für die obere und die untere Rahmensichtfläche angebracht sind, mit Fräsern (7,8,9) zur Bearbeitung des Rahmenecks, **dadurch gekennzeichnet, daß** der Werkzeugträger (3) einen dritten, mittleren Trägerarm (3c) aufweist, an dem die Fräser (7, 8, 9) gelagert sind.

2. Verputzvorrichtung nach Anspruch 1, **dadurch gekennzeichnet, daß** ein am mittleren Trägerarm (3c) angeordneter Fräskopf (6) ein Sägeblatt (7) aufweist, das gleichachsig mit einem oberen Fingerfräser (8) und einem unteren Fingerfräser (9) verbunden ist.

3. Verputzvorrichtung nach Anspruch 2, **dadurch gekennzeichnet, daß** der Fräskopf (6) zwischen seinen beiden Lagern (6a, 6b) bis auf die Welle ausgespart ist.

4. Putzvorrichtung nach Anspruch 2, **dadurch gekennzeichnet, daß** das Lager (6a) des Fräskopfs innerhalb der Riemenscheibe (10a) angeordnet ist.

5. Verputzvorrichtung nach Anspruch 1, **dadurch gekennzeichnet, daß** ein senkrechter Träger (3d) des Werkzeugträgers (3) U-förmig ausgebildet ist und Führungslager (3e) an der Innenseite der U-Schenkel montiert sind (Fig. 14-16).

## Claims

1. Finishing device for the corners of window or door frames made up of butt-welded plastic sections, with a tool support (3), which has a side-milling cutter (7) for the outside corner of the frame and is controllable on a machine bedplate (1) by means of a biaxial path control device in a horizontal axis and a vertical axis along the contour of the corner of the frame, whereby cutting tools for the top and bottom surfaces of the frame are attached to an upper and lower support arm (3a and 3b) of the tool support (3), with milling cutters (7, 8, 9) for machining of the corner of the frame, **characterised by** the fact that the tool support (3) has a third, central support arm (3c), on to which the milling cutters (7, 8, 9) are fixed.

2. Finishing device according to Claim 1, **characterised by** the fact that a milling head (6) fitted on the central support arm (3c) has a saw blade (7), which is connected coaxially with an upper end-milling cutter (8) and a lower end-milling cutter (9).

3. Finishing device according to Claim 2 **characterised by** the fact that the milling head (6) is recessed between its two bearings (6a, 6b) as far as the shaft.

4. Finishing device according to Claim 2 **characterised by** the fact that the bearing (6a) of the milling head is set inside the drive pulley (10a).

5. Finishing device according to Claim 1 **characterised by** the fact that a vertical support bracket (3d) of the tool support (3) is designed in a U-shape and guide bearings (3e) are mounted on the inside of the U-shaped shanks (Fig. 14-16).

## Revendications

1. Dispositif d'ébarbage pour les coins de châssis de fenêtres ou de portes constitués de profilés de matière plastique soudés bout à bout, comprenant un porte-outil (3), qui porte une fraise à disque (7) pour le coin extérieur du châssis et peut être commandé sur un cadre de machine (1) au moyen d'une commande continue biaxiale sur un axe horizontal et un axe vertical le long du contour du coin de châssis, dans lequel, sur un bras de support supérieur et un bras de support inférieur (3a ou 3b) du porte-outil (3) sont montés des outils de décolletage pour les surfaces visibles supérieure et inférieure du châssis, avec des fraises (7, 8, 9) pour travailler le coin de châssis, **caractérisé en ce que** le porte-outil (3) présente un troisième bras de support central (3c) sur lequel les fraises (7, 8, 9) sont montées.

2. Dispositif d'ébarbage selon la revendication 1, **caractérisé en ce qu'**une tête de fraise (6) agencée sur le bras de support central (3c) présente une lame de scie (7) qui est reliée sur le même axe avec une fraise à queue supérieure (8) et une fraise à queue inférieure (9).

3. Dispositif d'ébarbage selon la revendication 2, **caractérisé en ce que** la tête de fraise (6) est évidée entre ses deux paliers (6a, 6b) jusqu'à l'arbre.

4. Dispositif d'ébarbage selon la revendication 2, **caractérisé en ce que** le palier (6a) de la tête de fraise est agencé à l'intérieur de la poulie à courroie (10a).

5. Dispositif d'ébarbage selon la revendication 1, **caractérisé en ce qu'**un support vertical (3d) du porte-outil (3) a une forme en U et des paliers de guidage (3e) sont montés sur le côté intérieur de la branche en U (Fig. 14-16).
